# FASCICULE DE BREVET EUROPEEN

(11) **EP 1 791 733 B1**
(45) Date de publication et mention de la délivrance du brevet: **03.09.2008**
(21) Numéro de dépôt: 05782732.1
(22) Date de dépôt: 13.09.2005
(51) Int. Cl.: B60S 1/32

(54) **BRAS D"ESSUIE-GLACE MONOBLOC QUI COMPORTE UN TRONCON INTERMEDIAIRE FLEXIBLE COMPORTANT DES RAINURES TRANSVERSALES**
EINSTÜCKIGER WINDSCHUTZSCHEIBENWISCHERARM MIT EINEM QUERNUTEN ENTHALTENDEN FLEXIBLEN ZWISCHENABSCHNITT
SINGLE-PIECE WINDSCREEN WIPER ARM COMPRISING A FLEXIBLE INTERMEDIATE SECTION INCLUDING TRANSVERSE GROOVES

(30) Priorité: 20.09.2004 FR 0409944
(43) Date de publication de la demande: 06.06.2007
(73) Titulaire: VALEO SYSTEMES D'ESSUYAGE, 78321 La Verriere (FR)
(72) Inventeur: RUAT, Olivier, 49800 Trelaze (FR); POTON, Eric, F-63430 Pont du Château (FR); CERDAN, Jérôme, F-63570 Beaulieu (FR); ANDRE-MASSE, Laurent, F-Brassac les Mines (FR)
(86) Numéro de dépôt international: PCT/EP2005/009797
(87) Numéro de publication internationale: WO 2006/032389

(56) Documents cités:
- EP-A- 0 525 850
- DE-A1- 10 052 616
- US-A1- 2004 078 917
- PATENT ABSTRACTS OF JAPAN vol. 2000, no. 26, 1 juillet 2002 (2002-07-01) & JP 2001 253321 A (OZAKI MITSUKATSU), 18 septembre 2001 (2001-09-18)

## Description

L'invention concerne un bras d'essuie-glace dit monobloc qui comporte des moyens pour conférer de la flexibilité à un tronçon intermédiaire d'un tel bras.

L'invention concerne plus particulièrement un bras d'essuie-glace monobloc d'orientation générale longitudinale qui comporte :
- un premier tronçon d'extrémité d'entraînement qui est fixé directement à un arbre d'axe globalement vertical d'entraînement en balayage alterné du bras ;
- un second tronçon d'extrémité de balayage qui est destiné à porter un balai d'essuyage de la face supérieure d'une vitre ; et
- des moyens pour conférer de la flexibilité à un tronçon intermédiaire du bras de manière que le second tronçon d'extrémité de balayage soit déplaçable depuis une position d'essuyage dans laquelle le balai d'essuyage est plaqué contre la vitre par l'élasticité propre du bras, vers une position dite d'intervention, notamment de démontage, dans laquelle le second tronçon d'extrémité de balayage est éloigné de la vitre, sous l'effet d'un effort, par exemple de traction, appliqué au bras pour déformer élastiquement le tronçon intermédiaire flexible.

On connaît déjà des bras d'essuie-glace de ce type, notamment par Le document US-A-4.864.678. Ce type de bras d'essuie-glace comporte un tronçon intermédiaire flexible qui prolonge le premier tronçon d'extrémité de fixation par une ramification à deux branches qui s'étendent dans un plan horizontal parallèle à celui de la vitre. Les extrémités des deux branches se rejoignent en se fondant dans le second tronçon d'extrémité. Les deux branches délimitent ainsi latéralement un orifice central. Les deux branches ont une épaisseur "faible" par rapport à l'épaisseur des deux tronçons d'extrémité du bras de manière à conférer au tronçon intermédiaire une certaine flexibilité.

Cependant, la faible épaisseur du tronçon intermédiaire fragilise le bras. De plus, cette conception est complexe et onéreuse à réaliser.

Afin de résoudre ces problèmes, l'invention propose un bras d'essuie-glace du type décrit précédemment, caractérisé en ce que le bras est réalisé par moulage, compression ou estampage en matière plastique, ou en matière composite qui comporte des fibres dont la flexion élastique est limitée, et en ce que le tronçon intermédiaire comporte au moins une rainure globalement transversale par rapport à l'orientation longitudinale du bras qui est agencée dans une face supérieure du bras de manière à conférer au tronçon intermédiaire ladite flexibilité.

Selon d'autres caractéristiques de l'invention :
- le tronçon intermédiaire flexible comporte une série de rainures globalement transversales adjacentes qui sont agencées dans la face supérieure du bras de manière à conférer au tronçon intermédiaire ladite flexibilité ;
- les rainures sont réparties longitudinalement de manière régulière le long du tronçon intermédiaire flexible ;
- les rainures sont réparties longitudinalement à intervalles de plus en plus courts depuis les extrémités du tronçon intermédiaire flexible jusqu'à une partie centrale du tronçon intermédiaire flexible ;
- les rainures sont parallèles ;
- les rainures ont une orientation orthogonale à l'orientation longitudinale du tronçon intermédiaire flexible ;
- les rainures sont orientées de manière à former un angle aigu par rapport à l'orientation longitudinale du tronçon intermédiaire flexible ;
- les rainures sont réparties et orientées de manière que le tronçon intermédiaire flexible soit déformé élastiquement selon un mouvement combiné de flexion et de rotation par rapport au premier tronçon d'extrémité d'entraînement ;
- les flancs opposés d'une rainure constituent des butées pour limiter l'angle de flexion du tronçon intermédiaire flexible du bras ;
- les flancs opposés d'une rainure sont globalement parallèles entre eux et sont orientés en biseau par rapport à l'orientation longitudinale du tronçon intermédiaire flexible ;
- le tronçon intermédiaire flexible comporte au moins une rainure globalement transversale qui est agencée dans une face inférieure du bras ;
- le tronçon intermédiaire flexible comporte une pluralité de rainures parallèles globalement transversales qui sont agencées dans la face inférieure du bras ;
- le fond d'une rainure est plat ;
- le fond d'une rainure a une forme concave ;
- le fond d'une rainure est formé par l'intersection des flancs opposés de la rainure ;
- le tronçon intermédiaire flexible comporte des moyens pour masquer les rainures ;
- le bras comporte un film de matière plastique qui affleure à la face du tronçon intermédiaire flexible de manière à masquer les rainures ;
- le film est formé venu de matière avec le bras d'essuie-glace ;
- les rainures sont remplies d'une mousse de remplissage compressible ;
- le bras comporte plusieurs tronçons intermédiaires flexibles qui sont répartis entre le premier et le second tronçons d'extrémité ;
- l'axe de l'arbre d'entraînement est décalé latéralement par rapport à l'axe longitudinal du premier tronçon d'extrémité d'entraînement ;
- le premier tronçon d'extrémité d'entraînement comporte des moyens de fixation sur l'arbre d'entraînement qui sont débrayables lorsque l'effort de traction appliqué au bras pour amener le second tronçon d'extrémité de balayage vers sa position d'intervention est supérieur à un effort dit de seuil ;
- le premier tronçon d'extrémité d'entraînement comporte des moyens de fixation qui sont débrayables par emboîtement élastique sur l'arbre d'entraînement ;
- les flancs opposés d'au moins une rainure comportent des moyens de maintien du bras en position d'intervention par emboîtement élastique de formes complémentaires.

D'autres caractéristiques et avantages apparaîtront au cours de la lecture de la description détaillée qui va suivre pour la compréhension de laquelle on se reportera aux dessins annexés parmi lesquels :
- la figure 1 est une vue en perspective qui représente l'avant d'un véhicule automobile qui est équipé de bras d'essuie-glace réalisés selon les enseignements de l'invention ;
- la figure 2 est une vue en perspective qui représente en détail un bras d'essuie-glace de la figure 1 qui comporte un tronçon intermédiaire flexible dans lequel des rainures transversales sont agencées selon l'invention ;
- la figure 3 est une vue de détail de la figure 2 qui représente le tronçon intermédiaire flexible et un premier tronçon d'extrémité de fixation à un arbre d'entraînement du bras en rotation alternée ;
- la figure 4 est une vue en coupe longitudinale du bras de la figure 3 selon le plan de coupe 4-4 ;
- la figure 5 est une vue similaire à celle de la figure 2 qui représente le bras d'essuie-glace dans une position d'intervention dans laquelle le tronçon intermédiaire flexible est déformé élastiquement ;
- la figure 6 est une vue en coupe longitudinale selon le plan de coupe 6-6 de la figure 5 qui représente le tronçon intermédiaire flexible déformé élastiquement ;
- la figure 7 est une vue similaire à celle de la figure 3 qui représente une première variante de l'agencement des rainures dans le tronçon intermédiaire flexible ;
- la figure 8 est une vue similaire à celle de la figure 3 qui représente une deuxième variante de l'agencement des rainures dans le tronçon intermédiaire flexible ;
- la figure 9 est une vue similaire à celle de la figure 3 qui représente une troisième variante de l'agencement des rainures dans le tronçon intermédiaire flexible ;
- la figure 10 est une vue similaire à celle de la figure 3 qui représente une quatrième variante de l'agencement des rainures dans le tronçon intermédiaire flexible ;
- la figure 11 est une vue similaire à celle de la figure 4 qui représente une variante de réalisation de l'invention dans laquelle les rainures sont masquées par un film de matière plastique ;
- la figure 12 représente une variante de la figure 4 dans laquelle les rainures ont une forme et une orientation particulières.

Dans la description qui va suivre, on désignera par des mêmes numéros de références des éléments identiques, similaires ou analogues.

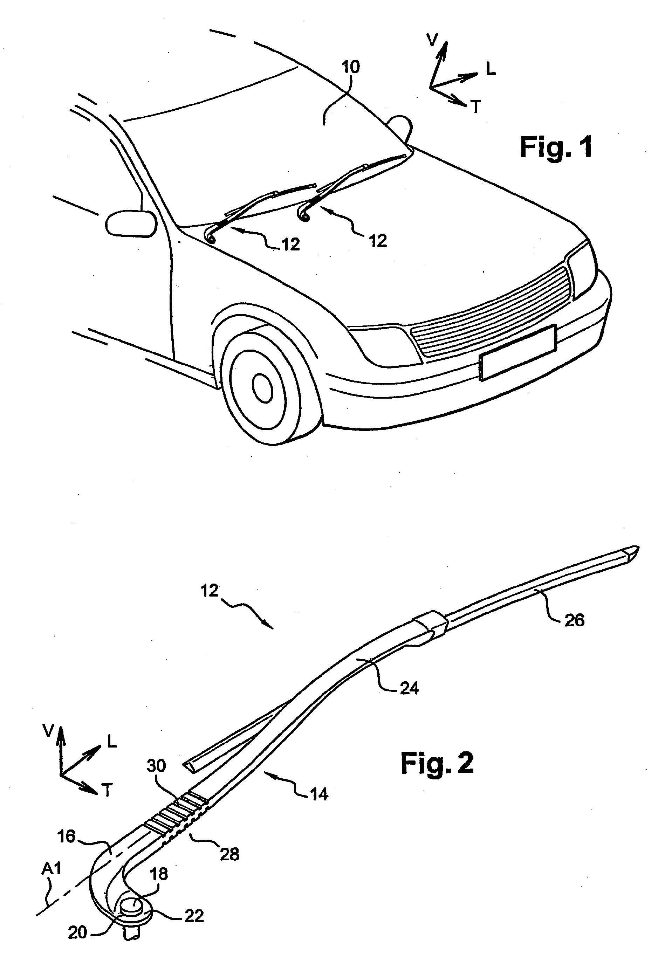

On adoptera, à titre non limitatif, dans la suite de la description une orientation longitudinale, verticale et transversale indiquée par le trièdre L, V, T des figures 1 et 2.

On a représenté à la figure 1 la partie avant d'un véhicule automobile qui comporte un pare-brise 10. Dans la suite de la description, le plan dans lequel le pare-brise 10 s'étend sera pris comme référence pour définir un plan horizontal, la face extérieure du pare-brise 10 étant considérée comme la face supérieure du pare-brise 10.

Le véhicule comporte aussi deux dispositifs d'essuie-glace 12 qui sont notamment destinés à racler l'eau, les liquides ou les impuretés présents sur le pare-brise 10. Les dispositifs d'essuie-glace sont ici agencés au repos au niveau du bord avant du pare-brise 10.

Les deux dispositifs d'essuie-glace 12 étant similaires, la description qui va suivre s'appliquera indifféremment à chacun d'eux.

Comme représenté à la figure 2, le dispositif d'essuie-glace 12 comporte un bras d'essuie-glace 14 monobloc d'axe globalement longitudinal. Le bras 14 est réalisé dans un matériau plastique ou dans un matériau composite comportant des fibres dont la flexion élastique est limitée, par exemple par moulage.

Le bras 14 comporte un premier tronçon d'extrémité 16 qui est représenté à gauche à la figure 2. L'extrémité libre de ce premier tronçon d'extrémité 16 comporte un orifice de fixation 20 qui est destiné ici à être monté directement sur un arbre 18 d'axe globalement vertical d'entraînement en balayage alterné du bras 14. Ce premier tronçon d'extrémité 16 sera appelé tronçon d'entraînement dans la suite de la description.

Il est à noter que l'invention n'est pas limitée au balayage en rotation, mais trouve aussi à s'appliquer dans le cas du balayage linéaire.

Comme illustré à la figure 1, l'arbre d'entraînement 18 est agencé au niveau d'un bord avant du pare-brise 10, et il est relié à un dispositif moto-réducteur (non représenté) qui est dissimulé sous le capot du compartiment moteur du véhicule.

A son extrémité libre, le tronçon d'entraînement 16 comporte une tête latérale 22 qui s'étend transversalement par rapport à l'axe longitudinal du tronçon d'entraînement 16. L'orifice de fixation 20 est agencé dans la tête 22 de manière que l'axe de l'arbre d'entraînement 18 est ici décalé latéralement par rapport à l'axe longitudinal "A1" du tronçon d'entraînement 16.

Le bras 14 comporte un second tronçon d'extrémité 24 qui est représenté à droite à la figure 2. L'extrémité libre du second tronçon d'extrémité 24 comporte des moyens (non représentés) de support d'un balai d'essuyage 26. Les moyens de support du balai d'essuyage et le balai d'essuyage lui-même ne seront pas décrits plus en détail dans la suite de la description.

Le second tronçon d'extrémité 24 sera appelé tronçon de balayage dans suite de la description.

Dans une position de balayage qui est représentée aux figures 1 et 2, le balai d'essuyage 26 est plaqué verticalement contre le pare-brise 10 par l'élasticité propre du bras.

Afin de permettre à un utilisateur de démonter ou de nettoyer le balai d'essuyage 26, le tronçon de balayage 24 est déplaçable, depuis sa position d'essuyage, vers une position d'intervention, d'entretien, ou d'intervention dans laquelle le tronçon de balayage 24 est éloigné du pare-brise 10.

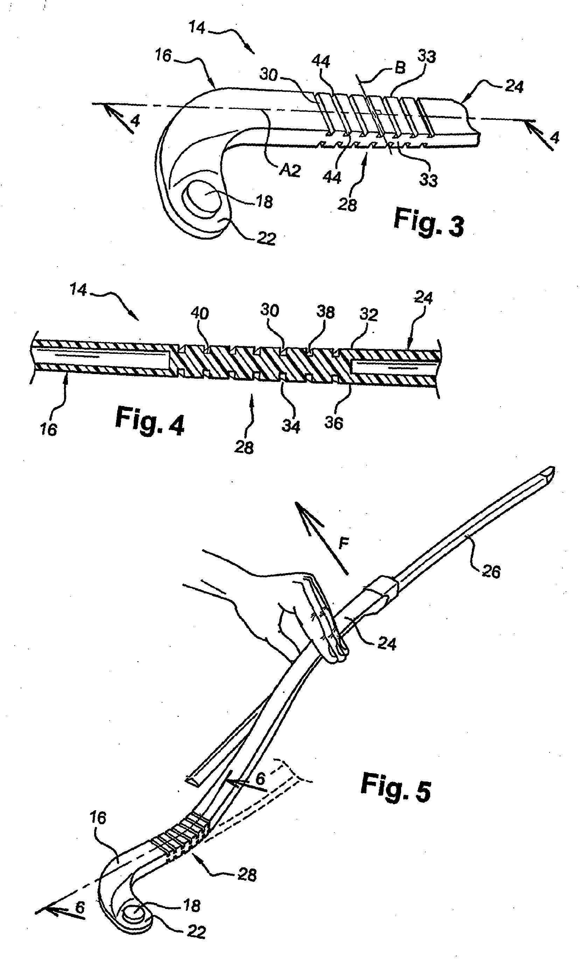

A cet effet, le bras 14 comporte un tronçon intermédiaire 28 qui comporte des moyens pour lui conférer de la flexibilité. Ainsi, le tronçon de balayage 24 est déplaçable vers sa position soulevée dite d'intervention sous l'effet d'un effort "F" de traction appliqué au tronçon de balayage 24 pour déformer élastiquement le tronçon intermédiaire flexible 28 comme illustré à la figure 5.

Le tronçon d'entraînement 16 a ici une longueur inférieure à celle du tronçon de balayage 24 de façon que le tronçon intermédiaire flexible 28 soit agencé à proximité de l'arbre d'entraînement 18. Par l'effet de bras de levier, l'effort de traction "F" à appliquer pour déplacer le tronçon de balayage 24 est inversement proportionnel à la longueur entre le point d'application de l'effort de traction "F" et le tronçon intermédiaire flexible 28.

Selon les enseignements de l'invention, le tronçon intermédiaire flexible 28 comporte à cet effet au moins une rainure 30 sensiblement rectiligne d'axe "B" d'orientation globalement transversale par rapport à l'orientation longitudinale de l'axe "A2" du tronçon intermédiaire flexible 28. La présence de la rainure 30 permet de rendre le tronçon intermédiaire 28 localement flexible globalement autour de l'axe transversal "B" de la rainure 30.

Comme représenté à la figure 3, le tronçon intermédiaire flexible 28 comporte de préférence une série de rainures 30 globalement transversales adjacentes, ici au nombre de sept, qui sont agencées au moins dans la face supérieure 32 du tronçon intermédiaire 28.

De manière générale, les intervalles entre deux rainures 30 consécutives sont déterminés en fonction de la courbure du tronçon intermédiaire 28 en position d'intervention que l'on souhaite obtenir.

Les rainures 30 sont ici réparties de manière régulière le long du tronçon intermédiaire 28, c'est-à-dire que les intervalles entre deux rainures 30 consécutives sont constants le long du tronçon intermédiaire 28.

Chaque rainure 30 comporte des extrémités 44 débouchantes, c'est-à-dire qu'elle traverse transversalement le tronçon intermédiaire 28 d'un bord latéral 33 à l'autre.

Comme représenté à la figure 4, le tronçon intermédiaire 28 comporte avantageusement une deuxième série de rainures 34 qui sont agencées dans la face inférieure 36 du tronçon intermédiaire 28. Les rainures inférieures 34 sont ici agencées symétriquement aux rainures supérieures 30 par rapport à un plan longitudinal horizontal médian du tronçon intermédiaire 28.

Les rainures 30, 34 du tronçon intermédiaire flexible 28 représenté aux figures 3 et 4 sont parallèles entre elles et leurs axes "B" sont orientés sensiblement orthogonalement à l'axe "A2" d'orientation longitudinale du tronçon intermédiaire flexible 28.

Comme représenté à la figure 4, en section selon un plan longitudinal vertical, les rainures 30, 34 ont chacune un profil en "U" dont les flancs opposés 38 sont globalement verticaux et parallèles entre eux et dont le fond 40 peut avoir par exemple une forme plate ou concave.

Selon une variante non représentée, la section des rainures 30, 34 peut aussi avoir la forme d'un "V" ou d'un chevron dont les flancs opposés sont inclinés en opposition de façon à converger l'un vers l'autre pour former le fond de la rainure 30, 34.

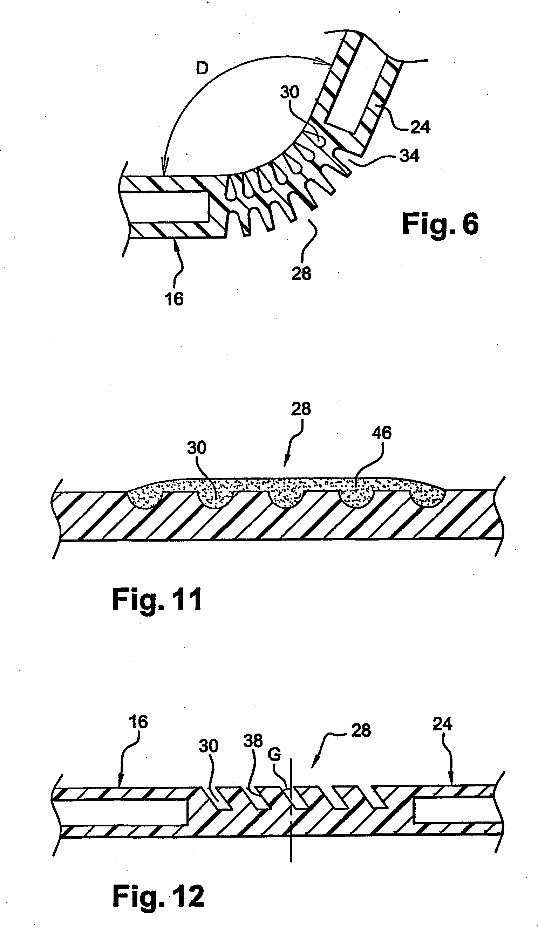

Selon une autre variante représentée à la figure 12, les flancs opposés 38 de chaque rainure 30 sont inclinés d'un même angle "G" par rapport à la direction verticale, la rainure 30 ayant ainsi un profil en biseau.

Comme représenté à la figure 4, les tronçons d'extrémités d'entraînement 16 et de balayage 24 sont formés de manière à être creux tandis que le tronçon intermédiaire flexible 28 est "plein".

Les rainures 30, 34 sont avantageusement réalisées avec le bras par moulage, compression, estampage ou tout autre procédé analogue ou similaire.

Comme représenté à la figure 5, lorsqu'un opérateur désire éloigner le tronçon de balayage 24 du bras 14, par exemple pour remplacer le balai d'essuyage 26, il exerce un effort de traction "F" globalement vertical sur le tronçon de balayage 24.

Le tronçon de balayage 24, qui était plaqué sur la face supérieure du pare-brise 10 en position de balayage, est alors éloigné du pare-brise 10 par déformation élastique du tronçon intermédiaire flexible 28.

La face supérieure 32 du tronçon intermédiaire 28 est alors comprimée longitudinalement et sa face inférieure 36 est tendue longitudinalement.

Les flancs 38 des rainures inférieures 34 s'éloignent alors les uns des autres dans un mouvement d'écartement. La présence des rainures inférieures 34 sous le tronçon intermédiaire flexible 28 permet de concentrer aux fonds 40 des rainures 34 une partie des tensions d'étirement qui seraient autrement susceptibles de déformer plastiquement la face inférieure du tronçon intermédiaire 28.

Les flancs 38 des rainures supérieures 30 se rapprochent les uns des autres dans un mouvement de "pincement" des rainures 30 de manière à concentrer au fond des rainures 30 les efforts de compression qui seraient autrement susceptibles de déformer plastiquement la face supérieure 32 du tronçon intermédiaire 28.

La déformation élastique du tronçon intermédiaire 28 est guidée par l'agencement et l'orientation des rainures 30, 34. Au niveau de chaque rainure supérieure 30, le tronçon intermédiaire 28 fléchit en effet de façon à plier suivant l'orientation de la rainure 30. Les rainures supérieures 30 étant orientées orthogonalement par rapport à l'orientation longitudinale du tronçon intermédiaire 28, le tronçon intermédiaire 28 est déformé dans un plan longitudinal vertical et le tronçon de balayage 24 est déplacé dans ce même plan.

De plus, comme représenté à la figure 6, les rainures 30 étant réparties régulièrement, le tronçon intermédiaire 28 est fléchi selon un rayon de courbure constant, c'est-à-dire de manière à former un arc de cercle.

L'angle maximal de flexion "D" formé entre le tronçon d'entraînement 16 et le tronçon de balayage 24 est déterminé par les flancs 38 des rainures supérieures 30. En effet, lorsque le tronçon intermédiaire 28 est fléchi, les bords supérieurs des flancs opposés 38 de chaque rainure supérieure 30 se rapprochent l'un de l'autre jusqu'à entrer en contact mutuel. Les flancs 38 forment ainsi des butées qui limitent l'angle de flexion "D" du tronçon intermédiaire flexible 28.

Lorsque l'effort de traction "F" appliqué au tronçon de balayage 24 est relâché, le tronçon de balayage est rappelé élastiquement vers sa position de balayage par l'élasticité propre du tronçon intermédiaire flexible 28.

Si l'effort de traction "F" appliqué au tronçon de balayage 24 est trop grand, le bras 14 risque d'être endommagé, par exemple par déformation plastique ou par rupture d'un tronçon du bras 14.

Pour résoudre ce problème, on peut à titre complémentaire prévoir des moyens de fixation (non représentés) du tronçon d'entraînement 16 sur l'arbre d'entraînement 18 avantageusement "débrayables" lorsque l'effort de traction "F" appliqué au tronçon de balayage 24 pour amener le tronçon de balayage 24 en position d'intervention est supérieur à un effort dit de seuil. Par exemple, le tronçon d'entraînement 16 comporte des moyens de fixation à l'arbre d'entraînement 18 par emboîtement élastique de formes complémentaires.

Selon une variante de l'invention, les rainures 30 sont réparties le long du tronçon intermédiaire 28 en fonction de la courbure du tronçon intermédiaire 28 en position d'intervention que l'on souhaite obtenir.

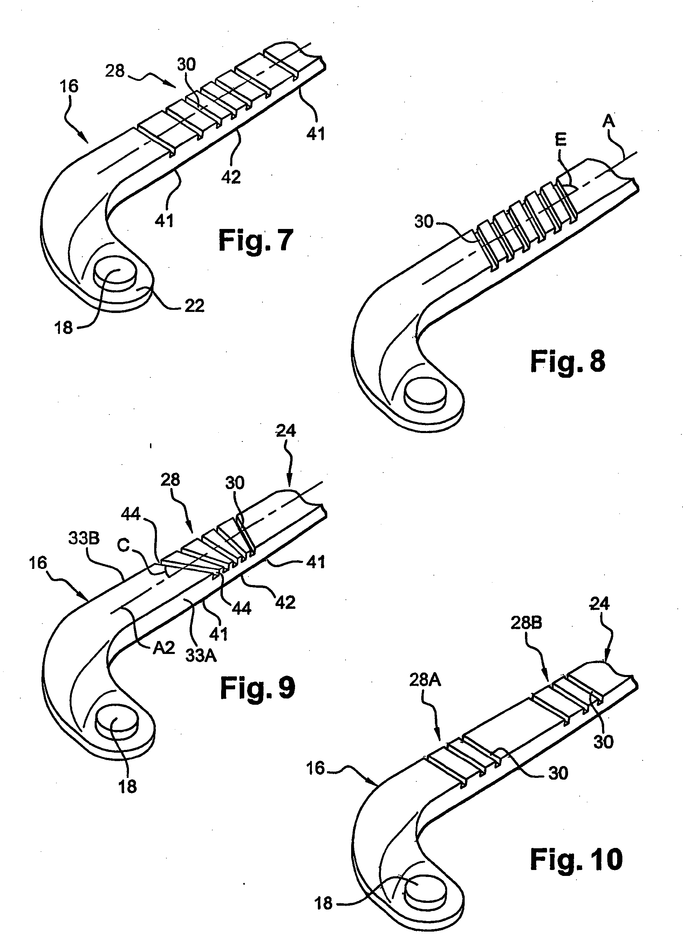

Ainsi, selon une première variante de l'invention qui est représentée à la figure 7, les rainures supérieures 30 sont réparties longitudinalement à intervalles de plus en plus courts depuis les extrémités 41 du tronçon intermédiaire 28 jusqu'à une partie centrale 42 du tronçon intermédiaire 28.

La partie centrale 42 du tronçon intermédiaire flexible 28 est donc plus flexible que les extrémité 41 de ce tronçon 28.

Ainsi, lorsque le tronçon de balayage est en position d'intervention et que le tronçon intermédiaire 28 est déformé élastiquement en flexion, le rayon de courbure de la partie centrale 42 du tronçon intermédiaire 28 est plus petit que le rayon de courbure des extrémité 41 du tronçon intermédiaire 28 de sorte que le tronçon intermédiaire 28 est déformé globalement selon un arc d'ellipse ou de parabole.

Selon une deuxième variante de l'invention qui est représentée à la figure 8, les rainure supérieures 30 sont toujours parallèles entre elles, mais elles sont orientées de manière à former un angle aigu "E" par rapport à l'orientation longitudinale "A2" du tronçon intermédiaire flexible 28.

Ainsi, lorsque le tronçon de balayage 24 est en position d'intervention, le tronçon intermédiaire 28 est fléchi selon une courbure en forme globalement d'arc d'hélice d'axe d'orientation parallèle à l'orientation des rainures 30.

En position d'intervention, le tronçon de balayage 24 est donc orienté de manière que le balai d'essuyage 26 ne soit plus situé dans un plan orthogonal à celui du pare-brise 10. Par exemple, le balai d'essuyage 26 est alors orienté vers l'opérateur afin de faciliter le démontage du balai 26.

Selon une troisième variante de l'invention qui est représentée à la figure 9, les rainures 30 ne sont pas parallèles entre elles. Elles sont orientées "en éventail" de manière que le tronçon intermédiaire flexible 28 soit déformé élastiquement selon un mouvement combiné de flexion et de rotation par rapport au tronçon d'entraînement 16.

Dans l'exemple représenté à la figure 9, la rainure 30 qui est dans la partie centrale 42 du tronçon intermédiaire 28 est orientée orthogonalement à la direction longitudinale de l'axe "A2" du tronçon intermédiaire 28. Les rainures 30 adjacentes sont orientées de manière à former un angle aigu "C" avec l'axe longitudinal du tronçon intermédiaire 28. L'angle "C" formé par chaque rainure 30 est de plus en plus grand à mesure que la rainure 30 est proche d'une extrémité 41 du tronçon intermédiaire 28, de sorte que les rainures 30 s'étendent "en éventail" sur la face supérieure 32 du tronçon intermédiaire 28. Ainsi, les extrémités débouchantes 44 des rainures 30 sont plus rapprochées dans un bord latéral 33A du tronçon intermédiaire 28 que dans l'autre bord latéral 33B.

Lorsque le tronçon de balayage 24 est tiré vers sa position d'intervention, le tronçon intermédiaire 28 est donc déformé non seulement selon un mouvement de flexion, mais également selon un mouvement de rotation ou de torsion autour de son axe "A2" par rapport au tronçon d'entraînement 16. En effet, le bord latéral 33A sur lequel les extrémités débouchantes 44 des rainures 30 sont plus rapprochées a un rayon de courbure plus court que le rayon de courbure de l'autre bord latéral 33B.

In en résulte que le tronçon de balayage 24 n'est pas seulement déplacé dans un plan orthogonal à celui du pare-brise 10, mais qu'il subit aussi une rotation autour de son axe longitudinal "A3" par rapport au tronçon d'entraînement 16. Comme décrit précédemment, ce mouvement combiné facilite par exemple le démontage de l'essuie-glace 26 pour l'opérateur.

Selon une quatrième variante de l'invention représentée à la figure 10, le bras 14 comporte plusieurs tronçons intermédiaires flexibles qui sont répartis entre le tronçon d'entraînement 16 et le tronçon de balayage 24. Dans l'exemple représenté à la figure 10, le bras 14 comporte un premier tronçon intermédiaire 28A qui prolonge longitudinalement le tronçon d'entraînement 16, et un second tronçon intermédiaire 28B qui prolonge longitudinalement le premier tronçon intermédiaire 28A. Ainsi, en position d'intervention du tronçon de balayage 24, le bras 14 est coudé au niveau de chacun des tronçons intermédiaires 28A et 28B.

Chaque tronçon intermédiaire 28A, 28B peut être réalisé selon l'un quelconque des modes de réalisation et variantes précédemment décrits.

Selon un autre aspect de l'invention, les rainures 30 sont masquées de manière que la face supérieure 32 du bras 14 soit globalement lisse.

Comme représenté à la figure 11, les rainures 30 sont remplies d'une mousse de remplissage 46 jusqu'à affleurer à la face supérieure 32 du tronçon intermédiaire 28. La mousse 46 est compressible afin de permettre le mouvement de pincement ou de fermeture des rainures 30 lorsque le tronçon de balayage 24 est déplacé vers sa position d'intervention.

Ainsi, l'aspect esthétique du bras d'essuie-glace est amélioré. De plus, la mousse 46 empêche que des salissures ne s'accumulent dans les rainures 30.

Selon une variante non représentée, les rainures 30 sont recouvertes d'un film de matière plastique qui affleure à la face supérieure 32 du tronçon intermédiaire 28. Avantageusement, le film plastique est réalisé venu de matière par moulage avec le bras 14 et les rainures 30, 34.

Selon une autre variante non représentée de l'invention, les flancs opposés 38 d'au moins une rainure 30 comportent des moyens de maintien du bras 14 en position d'intervention par emboîtement élastique de formes complémentaires.

Ainsi, lorsque le tronçon intermédiaire 28 est fléchi, les bords supérieurs des flancs opposés 38 de chaque rainure supérieure 30 se rapprochent l'un de l'autre jusqu'à entrer en contact mutuel, lesdits moyens s'emboîtant alors l'un dans l'autre de manière à maintenir le tronçon intermédiaire 28 fléchi même lorsque l'effort de traction "F" est interrompu.

L'invention a été décrite en référence à un bras d'essuie-glace 14 rectiligne dont les axes "A1", "A2" et "A3" des tronçons d'entraînement 16, intermédiaire 28 et de balayage 24 sont alignés selon un même axe longitudinal "A", mais elle est aussi applicable à un bras coudé dans lequel les axes "A1" et/ou "A2" et/ou "A3" ne sont pas alignés. La direction longitudinale utilisée dans la description est alors définie par rapport à l'orientation de l'axe du tronçon associé.

On comprendra que l'invention ne se limite pas à un essuie-glace de pare-brise avant d'un véhicule automobile, mais qu'elle pourra bien entendu être appliqué à des essuie-glaces de pare-brise arrière ou de toute autre surface vitrée du véhicule automobile.

## Revendications

1. Bras d'essuie-glace (14) monobloc d'orientation générale longitudinale (A) qui comporte :
- un premier tronçon d'extrémité (16) d'entraînement qui est fixé à un arbre (18) d'axe globalement vertical d'entraînement en balayage alterné du bras (14) ;
- un second tronçon d'extrémité (24) de balayage qui est destiné à porter un balai d'essuyage (26) de la face supérieure d'une vitre (10) ; et
- des moyens (30, 34) pour conférer de la flexibilité à un tronçon intermédiaire (28) du bras (14) de manière que le second tronçon d'extrémité de balayage (24) soit déplaçable depuis une position d'essuyage dans laquelle le balai d'essuyage (26) est plaqué contre la vitre (10) par l'élasticité propre du bras (14), vers une position d'intervention, par exemple de démontage, dans laquelle le second tronçon d'extrémité de balayage (24) est éloigné de la vitre (10), sous l'effet d'un effort (F) appliqué au bras (14) pour déformer élastiquement le tronçon intermédiaire flexible (28),
**caractérisé en ce que** le bras (14) est réalisé par moulage, compression ou estampage en matière plastique, ou en matière composite qui comporte des fibres dont la flexion élastique est limitée, et **en ce que** le tronçon intermédiaire (28) comporte au moins une rainure (30) globalement transversale par rapport à l'orientation longitudinale du bras (14) qui est agencée dans une face supérieure (32) du bras (14) de manière à conférer au tronçon intermédiaire (28) ladite flexibilité.

2. Bras d'essuie-glace (14) selon la revendication précédente, **caractérisé en ce que** le tronçon intermédiaire flexible (28) comporte une série de rainures (30) globalement transversales adjacentes qui sont agencées au moins dans la face supérieure (32) du bras (14) de manière à conférer au tronçon intermédiaire (28) ladite flexibilité.

3. Bras d'essuie-glace (14) selon la revendication précédente, **caractérisé en ce que** les rainures (30) sont réparties longitudinalement le long du tronçon intermédiaire flexible (28) en fonction de la courbure souhaitée du tronçon intermédiaire flexible (28) en position d'intervention.

4. Bras d'essuie-glace (14) selon la revendication 2, **caractérisé en ce que** les rainures (30) sont réparties longitudinalement à intervalles de plus en plus courts depuis les extrémités (41) du tronçon intermédiaire flexible (28) jusqu'à une partie centrale (42) du tronçon intermédiaire flexible (28).

5. Bras d'essuie-glace (14) selon l'une quelconque des revendications 2 à 4, **caractérisé en ce que** les rainures (30) sont parallèles.

6. Bras d'essuie-glace (14) selon la revendication précédente, **caractérisé en ce que** les rainures (30) ont une orientation orthogonale à l'orientation longitudinale du tronçon intermédiaire flexible (28).

7. Bras d'essuie-glace (14) selon la revendication 5, **caractérisé en ce que** les rainures (30) sont orientées de manière à former un angle aigu (E) par rapport à l'orientation longitudinale du tronçon intermédiaire flexible (28).

8. Bras d'essuie-glace (14) selon l'une quelconque des revendications 2 à 4, **caractérisé en ce que** les rainures (30) sont réparties et orientées de manière que le tronçon intermédiaire flexible (28) soit déformé élastiquement selon un mouvement combiné de flexion et de rotation par rapport au premier tronçon d'extrémité d'entraînement (16).

9. Bras d'essuie-glace (14) selon l'une quelconque des revendications précédentes, **caractérisé en ce que** les flancs opposés (38) d'une rainure (30) constituent des butées pour limiter l'angle de flexion (D) du tronçon intermédiaire flexible (28) du bras (14).

10. Bras d'essuie-glace (14) selon la revendication précédente, **caractérisé en ce que** les flancs opposés (38) d'une rainure (30) sont globalement parallèles entre eux et sont orientés en biseau par rapport à l'orientation longitudinale du tronçon intermédiaire flexible (28).

11. Bras d'essuie-glace (14) selon l'une quelconque des revendications précédentes, **caractérisé en ce que** le tronçon intermédiaire flexible (28) comporte au moins une rainure (34) globalement transversale qui est agencée dans une face inférieure (36) du bras (14).

12. Bras d'essuie-glace (14) selon la revendication précédente, **caractérisé en ce que** le tronçon intermédiaire flexible (28) comporte une pluralité de rainures (34) parallèles globalement transversales qui sont agencées dans la face inférieure (36) du bras (14).

13. Bras d'essuie-glace (14) selon l'une quelconque des revendications précédentes, **caractérisé en ce que** le fond (40) d'une rainure (30, 34) est plat.

14. Bras d'essuie-glace (14) selon l'une quelconque des revendications précédentes, **caractérisé en ce que** le fond (40) d'une rainure (30, 34) a une forme concave.

15. Bras d'essuie-glace (14) selon l'une quelconque des revendications précédentes, **caractérisé en ce que** le fond (40) d'une rainure (30, 34) est formé par l'intersection des flancs opposés (38) de la rainure (30, 34).

16. Bras d'essuie-glace (14) selon l'une quelconque des revendications précédentes, **caractérisé en ce que** le tronçon intermédiaire flexible (28) comporte des moyens (46) pour masquer les rainures (30).

17. Bras d'essuie-glace (14) selon la revendication précédente, **caractérisé en ce qu'**il comporte un film de matière plastique qui affleure à la face du tronçon intermédiaire flexible (28) de manière à masquer les rainures (30).

18. Bras d'essuie-glace (14) selon la revendication précédente, **caractérisé en ce que** le film est formé venu de matière avec le bras d'essuie-glace (14).

19. Bras d'essuie-glace (14) selon la revendication 13, **caractérisé en ce que** les rainures (30) sont remplies d'une mousse de remplissage (46) compressible.

20. Bras d'essuie-glace (14) selon l'une quelconque des revendications précédentes, **caractérisé en ce qu'**il comporte plusieurs tronçons intermédiaires flexibles (28A, 28B) qui sont répartis entre le premier (16) et le second (24) tronçons d'extrémité.

21. Bras d'essuie-glace (14) selon l'une quelconque des revendications précédentes, **caractérisé en ce que** l'axe de l'arbre d'entraînement (18) est décalé latéralement par rapport à l'axe longitudinal (A1) du premier tronçon d'extrémité d'entraînement (16).

22. Bras d'essuie-glace (14) selon l'une quelconque des revendications précédentes, **caractérisé en ce que** le premier tronçon d'extrémité d'entraînement (16) comporte des moyens de fixation sur l'arbre d'entraînement (18) qui sont débrayables lorsque l'effort de traction (F) appliqué au bras (14) pour amener le second tronçon d'extrémité de balayage (24) vers sa position d'intervention est supérieur à un effort dit de seuil.

23. Bras d'essuie-glace (14) selon la revendication précédente, **caractérisé en ce que** le premier tronçon d'extrémité d'entraînement (16) comporte des moyens de fixation qui sont débrayables par emboîtement élastique sur l'arbre d'entraînement (18).

24. Bras d'essuie-glace (14) selon l'une quelconque des revendications précédentes, **caractérisé en ce que** les flancs opposés (38) d'au moins une rainure (30) comportent des moyens de maintien du bras (14) en position d'intervention par emboîtement élastique de formes complémentaires.

## Claims

1. A single-piece windscreen wiper arm (14) of longitudinal general orientation (A) which comprises:
- a first driving end section (16) which is fixed to a shaft (18) of globally vertical axis driving in a reciprocating sweeping movement of the arm (14);
- a second sweeping end section (24) which is intended for supporting a blade (26) wiping the upper side of a pane (10); and
- means (30, 34) for providing flexibility to an intermediate section (28) of the arm (14) such that the second sweeping end section (24) is mobile from a wiping position wherein the wiper blade (26) is pressed against the pane (10) via the specific elasticity of the arm (14), towards an intervening position, for example dismantling, wherein the second sweeping end section (24) is spaced apart from the pane (10), under the effect of a force (F) applied to the arm (14) to cause the elastic deformation of the flexible intermediate section (28),
**characterised in that** the arm (14) is produced by moulding, compression or stamping in plastic material, or in composite material which consists of fibres the elastic bending of which is limited, and **in that** the intermediate section (28) comprises at least one groove (30) that is globally transverse in relation to the longitudinal orientation of the arm (14) which is arranged in the upper side (32) of the arm (14) so as to provide the intermediate section (28) with said flexibility.

2. A windscreen wiper arm (14) according to the preceding claim, **characterised in that** the flexible intermediate section (28) comprises a series of adjacent globally transverse grooves (30) which are arranged at least in the upper side (32) of the arm (14) so as to provide the intermediate section (28) with said flexibility.

3. A windscreen wiper arm (14) according to the preceding claim, **characterised in that** the grooves (30) are longitudinally distributed along the flexible intermediate section (28) according to the desired curve of the flexible intermediate section (28) in intervening position.

4. A windscreen wiper arm (14) according to claim 2, **characterised in that** the grooves (30) are longitudinally distributed at increasingly shorter intervals from the ends (41) of the flexible intermediate section (28) up to a central portion (42) of the flexible intermediate section (28).

5. A windscreen wiper arm (14) according to any one of claims 2 to 4, **characterised in that** the grooves (30) are parallel.

6. A windscreen wiper arm (14) according to the preceding claim, **characterised in that** the grooves (30) have an orientation orthogonal to the longitudinal orientation of the flexible intermediate section (28).

7. A windscreen wiper arm (14) according to claim 5, **characterised in that** the grooves (30) are orientated so as to form an acute angle (E) in relation to the longitudinal orientation of the flexible intermediate section (28).

8. A windscreen wiper arm (14) according to any one of claims 2 to 4, **characterised in that** the grooves (30) are distributed and orientated such that the flexible intermediate section (28) is elastically deformed according to a combined bending and rotary motion in relation to the first driving end section (16).

9. A windscreen wiper arm (14) according to any one of the preceding claims, **characterised in that** the opposite flanks (38) of a groove (30) constitute stops for limiting the bending angle (D) of the flexible intermediate section (28) of the arm (14).

10. A windscreen wiper arm (14) according to the preceding claim, **characterised in that** the opposite flanks (38) of a groove (30) are globally parallel with one another and are bevel-orientated in relation to the longitudinal orientation of the flexible intermediate section (28).

11. A windscreen wiper arm (14) according to any one of the preceding claims, **characterised in that** the flexible intermediate section (28) comprises at least one globally transverse groove (34) which is arranged in a lower side (36) of the arm (14).

12. A windscreen wiper arm (14) according to the preceding claim, **characterised in that** the flexible intermediate section (28) comprises a plurality of globally transverse parallel grooves (34) which are arranged in the lower side (36) of the arm (14).

13. A windscreen wiper arm (14) according to any one of the preceding claims, **characterised in that** the bottom (40) of a groove (30, 34) is flat.

14. A windscreen wiper arm (14) according to any one of the preceding claims, **characterised in that** the bottom (40) of a groove (30, 34) is concave.

15. A windscreen wiper arm (14) according to any one of the preceding claims, **characterised in that** the bottom (40) of a groove (30, 34) is formed via the intersection of the opposite flanks (38) of the groove (30, 34).

16. A windscreen wiper arm (14) according to any one of the preceding claims, **characterised in that** the flexible intermediate section (28) comprises means (46) for masking the grooves (30).

17. A windscreen wiper arm (14) according to the preceding claim, **characterised in that** it comprises a plastic film which is flush with the flexible intermediate section (28) so as to mask the grooves (30).

18. A windscreen wiper arm (14) according to the preceding claim, **characterised in that** the film and the windscreen wiper arm (14) are formed as a single piece.

19. A windscreen wiper arm (14) according to claim 13, **characterised in that** the grooves (30) are filled with compressible filling foam (46).

20. A windscreen wiper arm (14) according to any one of the preceding claims, **characterised in that** it comprises a plurality of flexible intermediate sections (28A, 28B) which are distributed between the first (16) and second (24) end sections.

21. A windscreen wiper arm (14) according to any one of the preceding claims, **characterised in that** the axis of the driving shaft (18) is laterally offset in relation to the longitudinal axis (A1) of the first driving end section (16) .

22. A windscreen wiper arm (14) according to any one of the preceding claims, **characterised in that** the first driving end section (16) comprises means for attaching on the driving shaft (18) which are disengageable when the tensile force (F) applied to the arm (14) for bringing the second sweeping end section (24) towards the intervening position thereof is greater than the threshold force.

23. A windscreen wiper arm (14) according to the preceding claim, **characterised in that** the first driving end section (16) comprises attachment means which are disengageable by elastic interlocking on the driving shaft (18) .

24. A windscreen wiper arm (14) according to any one of the preceding claims, **characterised in that** the opposite flanks (38) of at least one groove (30) comprise means for holding the arm (14) in intervening position by elastic interlocking of additional forms.

## Patentansprüche

1. Einteiliger Scheibenwischerarm (14) mit allgemeiner Längsausrichtung (A), der folgende Elemente umfaßt:
- Einen ersten Antriebsendabschnitt (16), der auf eine Welle (18) mit insgesamt vertikaler Achse des Arms zum abwechselnden Antrieb des Arms (14) befestigt ist;
- Einen zweiten Wischendabschnitt (24), der dazu bestimmt ist, einen Scheibenwischer (26) der Oberseite einer Scheibe (10) zu tragen;
- Mittel (30, 34), um einem Zwischenabschnitt (28) des Arms (14) Flexibilität zu verleihen, so daß der zweite Wischendabschnitt (24) ab einer Wischposition verschiebbar ist, in der der Scheibenwischer (26) durch die eigene Elastizität des Arms (14) gegen die Scheibe (10) gedrückt wird, zu einer Eingriffsposition, insbesondere Ausbauposition, in der der zweite Wischendabschnitt (24) von der Scheibe (10) entfernt wird, und zwar unter der Auswirkung einer Kraft (F), die auf den Arm (14) aufgebracht wird, um den flexible Zwischenabschnitt (28) elastisch zu verformen,
**dadurch gekennzeichnet, daß** der Arm (14) durch Guß, Pressung oder Gesenkschmieden aus Kunststoff oder aus Verbundmaterial ausgeführt wird, das Fasern umfaßt, deren elastische Biegung begrenzt ist, und **dadurch**, daß der Zwischenabschnitt (28) mindestens eine insgesamt quer verlaufende Nut (30) gegenüber der Längsausrichtung des Arms (14) umfaßt, die in einer oberen Seite (32) des Arms (14) gestaltet ist, so daß dem Zwischenabschnitt (28) die besagte Flexibilität verliehen wird.

2. Scheibenwischerarm (14) nach dem vorstehenden Anspruch, **dadurch gekennzeichnet, daß** der flexible Zwischenabschnitt (28) eine Reihe insgesamt quer verlaufender angrenzender Nuten (30) umfaßt, die mindestens in der oberen Seite (32) des Arms (14) gestaltet sind, damit dem Zwischenabschnitt (28) die besagte Flexibilität verliehen wird.

3. Scheibenwischerarm (14) nach dem vorstehenden Anspruch, **dadurch gekennzeichnet, daß** die Nuten (30) in Längsrichtung am flexiblen Zwischenabschnitt entlang in Abhängigkeit von der gewünschten Krümmung des flexiblen Zwischenabschnitts (28) in Eingriffsposition verteilt sind.

4. Scheibenwischerarm (14) nach dem vorstehenden Anspruch, **dadurch gekennzeichnet, daß** die Nuten (30) in Längsrichtung ab den Enden (41) des flexiblen Zwischenabschnitts (28) in immer kürzeren Intervallen bis zu einem mittleren Teil (42) des flexiblen Zwischenabschnitts verteilt sind.

5. Scheibenwischerarm (14) nach einem beliebigen der vorstehenden Ansprüche 2 bis 4, **dadurch gekennzeichnet, daß** die Nuten (30) parallel sind.

6. Scheibenwischerarm (14) nach dem vorstehenden Anspruch, **dadurch gekennzeichnet, daß** die Nuten (30) eine orthogonale Ausrichtung zur Längsausrichtung des flexiblen Zwischenabschnitts (28) haben.

7. Scheibenwischerarm (14) nach Anspruch 5,
**dadurch gekennzeichnet, daß** die Nuten (30) so ausgerichtet sind, daß sie einen spitzen Winkel (E) zur Längsausrichtung des flexiblen Zwischenabschnitts bilden.

8. Scheibenwischerarm (14) nach einem beliebigen der vorstehenden Ansprüche 2 bis 4, **dadurch gekennzeichnet, daß** die Nuten (30) so verteilt und ausgerichtet sind, daß der flexible Zwischenabschnitt (28) nach einer kombinierten Bewegung bestehend aus Biegung und Drehung gegenüber dem ersten Antriebsendabschnitt (16) elastisch verformt wird.

9. Scheibenwischerarm (14) nach einem beliebigen der vorstehenden Ansprüche, **dadurch gekennzeichnet, daß** die gegenüber liegenden Flanken (38) einer Nut (30) Anschläge zur Begrenzung des Biegewinkels (D) des flexiblen Zwischenabschnitts (28) des Arms (14) bilden.

10. Scheibenwischerarm (14) nach dem vorstehenden Anspruch, **dadurch gekennzeichnet, daß** die gegenüber liegenden Flanken (38) einer Nut (30) insgesamt parallel zueinander sind und gegenüber der Längsausrichtung des flexiblen Zwischenabschnitts (28) schräg ausgerichtet sind.

11. Scheibenwischerarm (14) nach einem beliebigen der vorstehenden Ansprüche, **dadurch gekennzeichnet, daß** der flexible Zwischenabschnitt (28) mindestens eine insgesamt quer verlaufende Nuten (34) umfaßt, die in einer unteren Seite (38) des Arms (14) gestaltet ist.

12. Scheibenwischerarm (14) nach dem vorstehenden Anspruch, **dadurch gekennzeichnet, daß** der flexible Zwischenabschnitt (28) eine Mehrzahl paralleler insgesamt quer verlaufender Nuten (34) umfaßt, die in der unteren Seite (36) des Arms (14) gestaltet sind.

13. Scheibenwischerarm (14) nach einem beliebigen der vorstehenden Ansprüche, **dadurch gekennzeichnet, daß** der Boden (40) einer Nut (30, 34) flach ist.

14. Scheibenwischerarm (14) nach einem beliebigen der vorstehenden Ansprüche, **dadurch gekennzeichnet, daß** der Boden (40) einer Nut (30, 34) eine konkave Form hat.

15. Scheibenwischerarm (14) nach einem beliebigen der vorstehenden Ansprüche, **dadurch gekennzeichnet, daß** der Boden (40) einer Nut (30, 34) aus der Kreuzung der gegenüberliegenden Flanken (38) der Nut (30, 34) gebildet wird.

16. Scheibenwischerarm (14) nach einem beliebigen der vorstehenden Ansprüche, **dadurch gekennzeichnet, daß** der flexible Zwischenabschnitt (28) Mittel (46) zur Maskierung der Nuten (30) umfaßt.

17. Scheibenwischerarm (14) nach dem vorstehenden Anspruch, **dadurch gekennzeichnet, daß** er eine Folie aus Kunststoff umfaßt, die an der Seite des flexiblen Zwischenabschnitts (28) bündig ist, damit die Nuten (30) maskiert werden.

18. Scheibenwischerarm (14) nach dem vorstehenden Anspruch, **dadurch gekennzeichnet, daß** die Folie aus dem gleichen Material wie der Scheibenwischerarm (14) gebildet wird.

19. Scheibenwischerarm (14) nach Anspruch 13, **dadurch gekennzeichnet, daß** die Nuten (30) mit einem verdichtbaren Füllschaum (46) ausgefüllt sind.

20. Scheibenwischerarm (14) nach einem beliebigen der vorstehenden Ansprüche, **dadurch gekennzeichnet, daß** er mehrere flexible Zwischenabschnitte (28A, 28B) umfaßt, die zwischen dem ersten (16) und dem zweiten (24) Endabschnitt verteilt sind.

21. Scheibenwischerarm (14) nach einem beliebigen der vorstehenden Ansprüche, **dadurch gekennzeichnet, daß** die Achse der Antriebswelle (16) gegenüber der Längsachse (A1) des ersten Antriebsendabschnitts (16) seitlich verschoben ist.

22. Scheibenwischerarm (14) nach einem beliebigen der vorstehenden Ansprüche, **dadurch gekennzeichnet, daß** der erste Antriebsendabschnitt (16) Mittel zur Befestigung auf der Antriebswelle (18)umfaßt, die ausrückbar sind, wenn die Zugkraft (F), die auf den Arm (14) ausgeübt wird, um den zweiten Wischendabschnitt (24) zu seiner Eingriffsposition zu führen, größer als eine sogenannte Schwellenkraft ist.

23. Scheibenwischerarm (14) nach dem vorstehenden Anspruch, **dadurch gekennzeichnet, daß** der erste Antriebsendabschnitt (16) Mittel zur Befestigung umfaßt, die durch elastisches Einstecken auf die Antriebswelle (18) ausrückbar sind.

24. Scheibenwischerarm (14) nach einem beliebigen der vorstehenden Ansprüche, **dadurch gekennzeichnet, daß** die gegenüberliegenden Flanken (38) mindestens einer Nut (30) Mittel zur Halterung des Arms (14) in Eingriffsposition durch elastisches Einstecken von sich ergänzenden Formen umfassen.
